(19) Europäisches Patentamt

European Patent Office

Office européen des brevets

(11) **EP 0 474 221 B1**

(12) **EUROPEAN PATENT SPECIFICATION**

(45) Date of publication and mention
of the grant of the patent:
**07.01.1998 Bulletin 1998/02**

(51) Int. Cl.$^6$: **B01J 19/18**, B01F 7/16

(21) Application number: **91114953.2**

(22) Date of filing: **04.09.1991**

(54) **Device for agitating and mixing liquid**

Vorrichtung zum Rühren und Mischen einer Flüssigkeit

Dispostif pour agiter et mélanger des liquides

(84) Designated Contracting States:
**DE NL**

(30) Priority: **06.09.1990 JP 234548/90**

(43) Date of publication of application:
**11.03.1992 Bulletin 1992/11**

(73) Proprietor:
**FUJI PHOTO FILM CO., LTD.**
**Kanagawa (JP)**

(72) Inventor:
**Muto, Kunio,**
**c/o Fuji Photo Film Co., Ltd.**
**Minami Ashigara-shi, Kanagawa-ken (JP)**

(74) Representative:
**Grünecker, Kinkeldey,**
**Stockmair & Schwanhäusser**
**Anwaltssozietät**
**Maximilianstrasse 58**
**80538 München (DE)**

(56) References cited:
**DE-C- 244 267**          **FR-A- 2 283 151**
**GB-A- 2 036 763**          **US-A- 3 334 870**

• **PATENT ABSTRACTS OF JAPAN vol. 5, no. 120
(C-65)(792) 4 August 1981 & JP-A-56 056 203 (
SANYOU DENKı SEISAKUSHO K.K. ) 18 May
1981**

## Description

This invention relates to a device for mixing and agitating liquids, and more particularly, to an agitating and mixing device which is used for production process in which a mixing liquid changes in quantity thereof, and which has a baffle for improving its agitating efficiency.

Prior art US Patent 33 48 70 describes a mixing tank including an agitating blade at the center of the bottom of the mixing tank and baffles of h-configuration. The baffles are mounted at the top end with an upper mounting support at the tank and extend vertically downwards. The legs of the h-baffle are oval-shaped.

For improving the agitating efficiency for mixing a liquid, a mixing tank of an agitating and mixing device has been changed or modified in various manners. If no baffle is provided in the mixing tank, then the following three problems will be involved.

(1) A dead space is formed around the agitating blade shaft installed at the center of the tank, thus adversely affecting the mixing of the liquid in the tank.
(2) Vortexes are formed in the liquid at the center portion, thus catching air to form bubbles in the liquid. Hence, in the agitating operation, increasing the speed of rotation is limited.
(3) In the case where the liquid in the tank is relatively small quantity, the liquid suffers from a so-called "precession"; that is, the liquid near by the tank wall become like ring lumps and move only within the portion near by the tank wall without the mixing, thus adversely affecting the mixing of the liquid in the tank.

Let us consider the mechanism of forming the above-described dead space, vortexes and precession.

When the agitating blade assembly begins its rotation, the liquid between the blade is moved down as a movement of the reaction to the blade against the inertia force of the liquid. In the next step, the liquid just above the blade is taken with the rotation of the blade so that the rest inertia force of the liquid just above the blade is reduced. The rotation component of the liquid just above the blade is, therefore, increased. As the same, a component in the rotating direction of the liquid between the blades is increased. Accordingly, an amount of the down flow reduces, and an amount of the rotating liquid in the vortex increase.

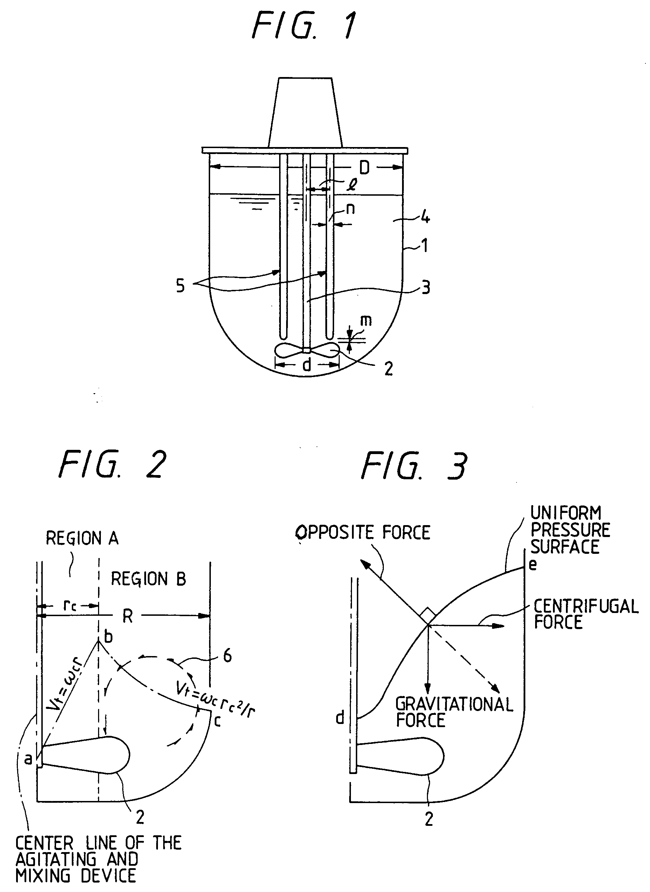

Namely, the dead space may be described with reference to a compound vortex model as shown in Fig. 2 which is a sectional view of the right half of a mixing tank. In the mixing tank, the flow speed $v_t$ in a circumferential direction is:

$$v_t = \omega_c \, r \; (0 \leq r \leq r_c) \qquad \text{Region A}$$

$$v_t = \omega \, r_c{}^2 / r \; (r_c \leq r \leq R) \qquad \text{Region B}$$

where $\omega_c$ is the angular speed, $r_c$ is the radius of the interface between the regions **A** and **B**, and R is the radius of the tank.

The distribution curve of the speeds $v_t$ is as indicated at a-b-c when the speeds are plotted on the vertical axis in Fig. 2. The inside of the mixing tank can be divided into the region **A** so-called a solid rotation section (or vortex column), and the region **B** similar to a potential flow. A secondary flow 6 moving inwardly in the region **B** cannot go into the region **A** which rotates as a solid, and therefore it runs down the interface between the regions **A** and **B** to reach the agitating blade assembly, thus being circulated. Thus, in the region **A**, the liquid moves independently in a circumferential direction, so that no mixing operation is given to the liquid in the region **A**. That is, the region **A** is a dead space.

As shown in Fig. 3 similar to Fig. 2, the vortex is a uniform pressure surface d-e which is formed by the resultant of the centrifugal force and the gravitational force. Therefore, as the centrifugal force to the liquid increases with the increasing speed of rotation of the agitating blade assembly, the gradient of the uniform pressure surface is increased; that is, the vortex is increased in depth.

It has been found through observation of the occurrence of the precession that first the center of the vortex goes around the agitating shaft while forming small circles, and thereafter this motion is gradually amplified, thus causing the liquid surface to swing greatly. Hence, under the condition that no vortex is formed (for instance when the liquid is agitated at extremely low speed), the precession will never occur.

In order to solve the above-described problems, in general, a tank baffle is provided; that is, several pieces of baffle plates, the width of which is about 1/10 of the diameter of the tank, are mounted on the inner surface of the tank. The side of each baffle plate which the liquid strikes causes the liquid flow to change the direction toward the central axis. As the result, the changed direction flow obstructs the formation of the dead space at the center of the tank, facilitates the liquid mixing and agitating operation, and eliminates the formation of bubbles in the liquid. Therefore, the provision of the tank baffle may substantially solve the above-described three problems may be substantially solved. However, in this case, the liquid stagnates on the other side of each baffle plate which the liquid does not strike.

Japanese Patent Application Laid-open No. 55-147144 has disclosed an agitating apparatus which an agitating blade assembly is provided on the bottom of a mixing tank. A baffle with fingers is provided in such a manner that it is positioned in the upper half of the liquid in the mixing tank so that the baffle is held inside the liquid during agitation, in which the agitator is less in power consumption, and less in the deposition of polymerized materials. An autoclave with an agitating blade assembly and displacement bodies of similar dimensions is disclosed in GB-A-2036763.

Furthermore, Japanese Utility Model Publication No. 63-7299 discloses an agitator which is provided with a tank baffle and a "tank inside-coil" mounted on the tank wall so arranged that they are on the surface of the liquid in the tank, thereby to eliminate the formation of vortexes and to improve the dispersion of the liquid.

The agitator disclosed by the aforementioned Japanese Patent Application Laid-open No. 55-147144 is to be used for a state of the unchanged quantity of liquid. Therefore, the above problems (1) and (2) may be improved by the agitator, but the problem (3) cannot be solved when the liquid level is low. On the other hand, the aforementioned Japanese Utility Model Publication No. 63-7299 concerns an improvement of the tank baffle, but it cannot eliminate the difficulty that the liquid stagnates behind the baffle plates.

Reaction vessels with agitating blade assemblies and comprising elongated cooling means disposed in parallel to the rotating shaft of the agitating blade assemblies are known from FR-A-2283151 and DE-C-244267

Accordingly, an object of this invention is to provide an agitating and mixing device in which the above-described problems (1) through (3) have been solved, and in which the difficulty is eliminated that the liquid stagnates behind the baffle plates, so that the efficiency of agitation is improved, the power consumption for agitation is reduced, and the speed of rotation for agitation can be increased.

This object is achieved with an agitating and mixing device having the features of claim 1.

The terms "a process in which a mixing liquid changes in quantity" as used herein is intended to mean the process in which first the quantity of liquid in the tank is small and accordingly the liquid level is low, and thereafter the liquid level in the tank is increased with an additional liquid poured into the tank while being uniformly mixed with the liquid in the tank.

In view of the foregoing, it can be said that the above-described problems (1) through (3) are due to the centrifugal force attributing to the flow of liquid in the direction of rotation.

This invention has been developed on the above-described research, and shows effective means for solving the three problems to provide the baffle in the region **A**. Specifically, the baffle is positioned in the interface between the region **A** and the region **B** where the velocity component in the direction of rotation is largest. Otherwise, the baffle is positioned just above the agitating blade assembly so that the rotation of the liquid just above the agitating blade taken with the rotation of the blades is reduced.

For this purpose, in the former device of the invention, a plurality of rods having a circular sectional view are provided around the agitating shaft of the agitating blade assembly in such a manner that they are extended nearly to the agitating blade assembly from above the surface of the liquid in the mixing tank. That is, in order to be adapted to the liquid level of which changes from low to high, it is necessary to provide a baffle which is extended from the liquid surface nearly to the vicinity of the agitating blade assembly. And, as for the position of the baffle, it is most effective to insert the baffle in the interface between the regions **A** and **B** where the velocity component $v_t$ in a circumferential direction in the tank is largest.

An embodiment of this invention will be described with reference to Fig. 1. Fig. 1 is a sectional side view showing an example of an agitating and mixing device according to the invention. The agitating and mixing device is used in a production process in which a mixing liquid changes in quantity, and has an agitating blade assembly 2 at the center of the bottom of a mixing tank 1, and a baffle for assisting the mixing and agitating operation thereof. The specific feature of the agitating and mixing device resides in that the agitating blade assembly 2 has an agitating shaft 3 which is held perpendicular to the surface of the liquid 4 in the mixing tank 1, and that a plurality of baffle sticks 5 having circular sectional view are provided, as the baffle, around the vertical agitating shaft 3 in such a manner that they are extended near to the agitating blade assembly from above the surface of the liquid.

As the aforesaid, the baffle sticks are provided around the agitating shaft in such a manner that they are extended near to the agitating blade assembly from above the surface of the liquid. This means that the interface between the above-described regions **A** and **B** is positioned on the circumference whose center is on the agitating shaft, and the baffle sticks are extended along the interface from low liquid level to high liquid level. In practice, the baffles sticks may be straight rods. Preferably, two to six baffle sticks are provided.

Since the baffle sticks are circular sectional view, the liquid flows around the baffle sticks smoothly without stagnating behind the baffle sticks. The baffle sticks are installed according to the following specification:

Direction of installation:

In parallel with the agitating shaft (it is not essential to install the baffle sticks in parallel with the agitating shaft)

Position of installation:

$d/5 \leq \ell \leq d/2$, where d is the diameter of the agitating blade assembly, and $\ell$ is the distance between the central axis of the agitating shaft and the central axis of each baffle sticks. The positions of the baffle sticks may not be symmetrical as long as they are near the interface of the regions **A** and **B**.

Depth of installation:

$d/20 \leq m \leq d/2$, where d is the diameter of the agitating blade assembly, and m is the distance between the lower end of each baffle stick and the agitating blade assembly.

Diameter:

$D/40 \le n \le D/10$, where D is the diameter of the tank, and n is the diameter of each baffle stick.

In the agitating and mixing device of the above embodiment, the baffle is formed near the interface between the regions **A** and **B** with the baffle sticks. The baffle obstructs the highest speed portion of the liquid flow in the circumferential direction, so that the liquid spread in the radial direction R of the regions **A** and **B**. As a result, the liquids in the regions **A** and **B** are mixed, and the distribution of speed is uniform in the radial direction R. Hence, with the aid of the baffle, a force opposite in direction to the centrifugal force acts in the region **A**, and the region **A** is not a dead space any longer. Accordingly, vortexes are scarcely formed; that is, the liquid surface is held substantially horizontal, and no precession is caused. Further-more, since the baffle sticks have the circular sectional view, the liquid will not stagnate behind the baffle sticks. That is, the mixing and agitating operation is carried out with high efficiency, and the agitation for mixing liquids uniformly can be achieved in a short time, with the result that the power consumption is reduced as much. In the prior art, it is impossible to increase the speed of rotation because of the formation of bubbles. On the other hand, in the invention, no bubbles are formed even if the speed of rotation is further increased.

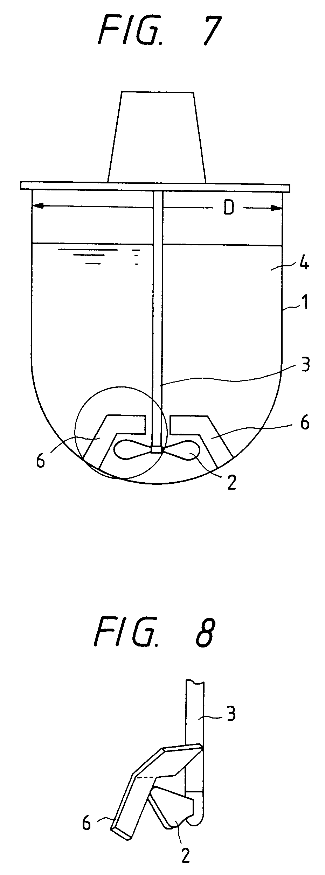

On the other hand, an embodiment not in accordance with this invention will be described with reference to Fig. 7 and 8. The portions having same functions of the above embodiment are defined by the same numerals. The specific feature of the agitating and mixing device of the embodiment not in accordance with resides in that a plurality of baffle plates 6 are provided around the vertical agitating shaft 3 just above the agitating blade. More preferably, the head portion of the plates 6 may be disposed by an inversed angle to the agitating blade angle. The plates 6 are separated at the position of the agitaing shaft each other with a distance more than the shaft diameter so that an interference between the shaft 3 and the plates 6 is avoided. Thus, in the embodiment, the plates 6 may be fixed not only on the inner surface of the mixing tank 4 as shown in Fig. 7, but also on a plurality of rods extending from the cover of the mixing tank 4.

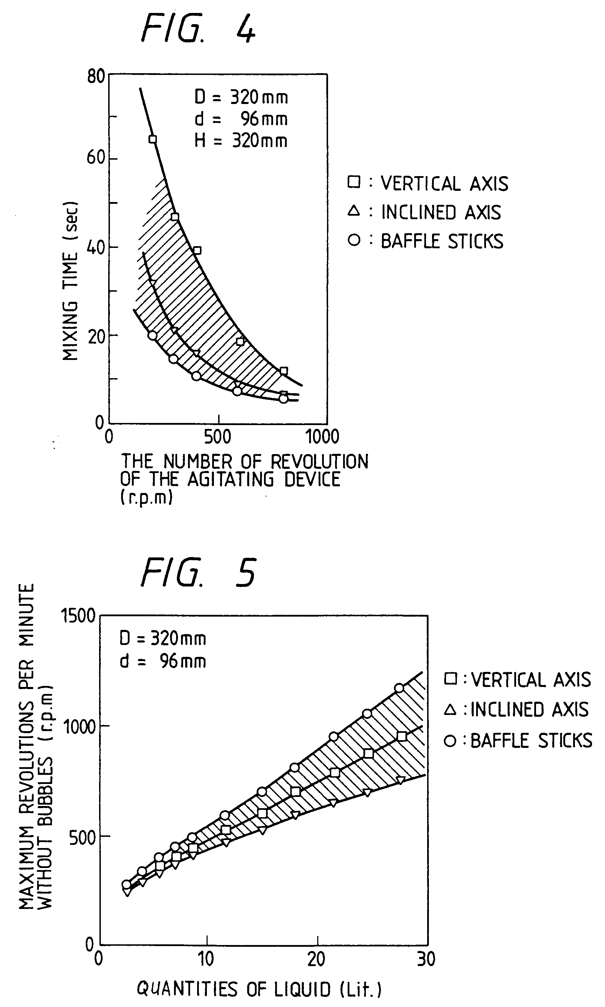

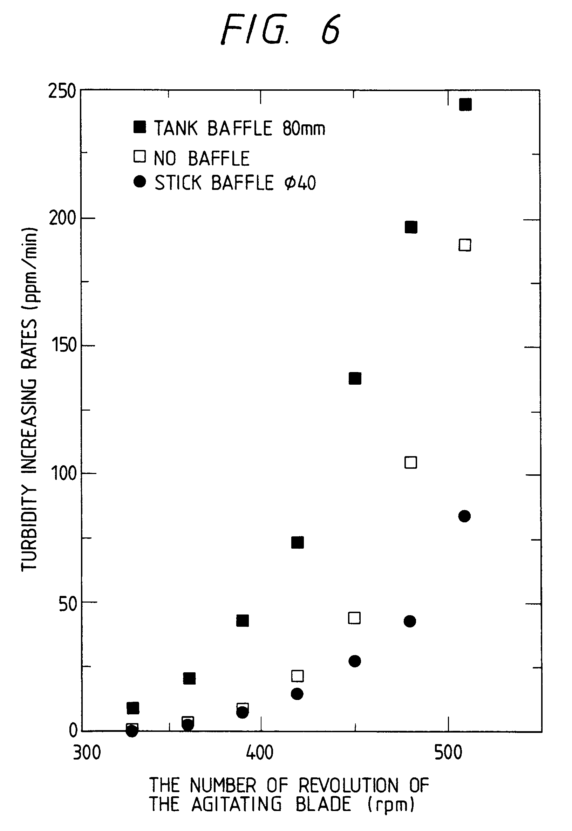

Fig. 1 is a sectional side view showing an example of a mixing and agitating device according to this invention. Figs. 2 and 3 are explanatory diagrams showing the right half of the agitating and mixing device for explaining a dead space, vortexes and precession which the device may encounter. Fig. 4 is a graphical representation indicating revolutions per minute with times required for completely uniformly mixing liquids, to show the results of comparison between the agitating and mixing device of the invention and a conventional agitating and mixing device. Fig. 5 is also a graphical representation indicating quantities of liquid in the tank with maximum revolutions per minute (rpm) at which no bubbles are formed, to show the results of comparison between the device of the invention and the conventional one. Fig. 6 is a graphical representation indicating turbidity increasing rates with speeds (rpm) of agitation, to show how readily the liquid in the tank catches air with different baffle plates. Fig. 7 is a sectional side view showing an example of a mixing and agitating device not according to this invention. Fig. 8. is a perspective view of the encirculed portion in Fig. 7 showing the relation of the agitating blade and the baffle.

Preferable Embodiment for Practicing the Invention

Example 1

A first example of the agitating and mixing device according to the invention will be described. The device was as shown in Fig. 1. The mixing tank 1 was 320 mm in inside diameter, and 320 mm in depth. The agitating blade assembly 2 made up of three blades, which was 96 mm in diameter (d), was provided at a height 30 mm from the bottom of the tank 1. Two baffle sticks 5 having the circular sectional view were set at a distance 32 mm (= l) from the central axis of the agitating shaft 3 in such a manner that they were on both sides of and in parallel with the agitating shaft 3, and they were spaced 10 mm (= m) above from the agitating blade assembly 2. The baffle sticks 5 were 16 mm in diameter (n). A polyvinyl alcohol solution was mixed and agitated with the device thus constructed.

Comparison Example 1

Comparison experiments were carried out under the conventional conditions by using a tank equal in size to the tank in Example 1, and an agitator, with two baffle plates 30 mm in width mounted on the tank. The agitator was mounted in two ways; that is, it was held vertical, and thereafter inclined. Figs. 4 and 5 indicate the results of comparison between Example 1 and Comparison Example 1 as to the periods of time elapsed until a uniformly mixed liquid is obtained and the maximum revolutions per minutes (rpm) of the agitator at which no bubbles are formed by the vortex.

As being clear from Figs. 4 and 5, Example 1 is superior to Comparison Example 1 in both cases of the vertical agitating axis and the inclined agitating axis.

The period of time elapsed until the uniformly mixed solution is obtained to use the fact that, when thymol blue and cresol red are dissolved by 2 ppm respectively in the solution in the tank, the solution appears yellow when it becomes acidic than PH = 8.3 as a threshold value, and it appears purple when it becomes alkaline than the threshold value.

Example 2

With reference to the device as shown in Fig. 1, the mixing tank 1 was 800 mm in inside diameter, and 800 mm in depth. The agitating blade assembly 2 made up of three blades, which was 250 mm in diameter (d), was provided at a height 100 mm from the bottom of the tank 1. Two baffle sticks 5 having the circular sectional view were set at a distance 100 mm (= l) from the central axis of the agitating shaft 3 in such a manner that they were on both sides of and in parallel with the agitating shaft 3, and they were spaced 100 mm (= m) above from the agitating blade assembly 2. The baffle sticks 5 were 40 mm in diameter (n). A 5 wt % gelatin solution was mixed and agitated with the device thus constructed.

Comparison Example 2

A mixing and agitating operation was carried out under the same conditions as those in Example 2 except that two tank baffle plates 80 mm in width and 5 mm in thickness were employed instead of the baffle sticks in Example 2.

Comparison Example 3

A mixing and agitating operation was carried out under the same condition as those in Comparison Example 2 except that the tank baffle plates were eliminated.

Fig. 6 indicates the comparison between Example 2 and Comparison Examples 2 and 3 as to the relationships between revolutions per minute (rpm) of the agitator and turbidity increasing rates. The inside diameter of the tank is 800 mm. The diameter (d) of the agitating blade assembly is 250 mm. The viscosity of the liquid is 6 cp. The level of the liquid is 335 L.

It can be understood that the agitating and mixing device of the invention is excellent as compared with the others, because the turbidity increasing rates represent how readily the agitating solution swallows up air.

As the above description, in the agitating and mixing device according to the invention, the formation of the dead space and the vortexes, and the occurrence of precession are substantially eliminated, and no stagnation of liquid is caused. Thus, with the device, the mixing and agitating operation can be achieved with high efficiency, and accordingly not only the agitating time but also the power consumption is reduced as much. Furthermore, no bubbles are formed in the liquid even when the speed of agitation is increased. Therefore, the productivity can be improved by increasing the speed of agitation as well as the quality of the products.

**Claims**

1. Agitating and mixing device for mixing liquids comprising an agitating blade assembly (2) in the lower central part of a mixing tank (1), and a baffle assembly (5) for assisting the mixing and agitating operation, said baffle assembly being composed of a plurality of rods parallel to an agitating shaft (3) of said agitating blade assembly (2), said rods extending from the top of the mixing tank (1),
**characterised by**
said rods being disposed at a radial position $l$ fulfilling the following condition:

$$\frac{d}{5} \leq l \leq \frac{d}{2}$$

with d being the diameter of the agitating blade assembly;
said rods extending to a depth specified by the following condition:

$$\frac{d}{20} \leq m \leq \frac{d}{2}$$

where m is the distance between the lower end of said rods (5) and the agitating blade assembly (2); and
said rods (5) having a circular cross-section.

**Patentansprüche**

1. Vorrichtung zum Rühren und Mischen von Flüssigkeiten, die eine Rührflügelanordnung (2) in dem unteren mittleren Teil eines Mischbehälters (1) und eine Stromstöreranordnung (5) zur Unterstützung des Mischens und Rührens aufweist, wobei die Stromstöreranordnung aus einer Vielzahl von Stäben aufgebaut ist, die parallel zu einer Rührachse (3) der Rührflügelanordnung (2) sind, wobei sich die Stäbe vom oberen Teil des Mischbehälters (1) erstrecken,
**dadurch gekennzeichnet, daß**
die Stäbe an einer radialen Position $l$ angeordnet sind, die die folgende Bedingung erfüllt:

$$\frac{d}{5} \leq l \leq \frac{d}{2}$$

wobei d der Durchmesser der Rührflügelanordnung ist;
die Stäbe sich bis zu einer Tiefe erstrecken, die durch die folgende Bedingung spezifiziert ist:

$$\frac{d}{20} \leq m \leq \frac{d}{2}$$

wobei n der Abstand zwischen dem unteren Ende der Stäbe (5) und der Rührflügelanordnung (2) ist; und

die Stäbe (5) kreisförmigen Querschnitt haben.

**Revendications**

1. Dispositif d'agitation et de mélange pour le mélange de liquides comprenant une ensemble d'agitateur à lame (2) dans la partie centrale inférieure d'un récipient de mélange (1) et un ensemble de déflecteur (5) pour assister l'opération de mélange et d'agitation, ledit ensemble de déflecteur étant composé d'une pluralité de tiges parallèles à un axe d'agitation (3) dudit ensemble de déflecteur d'agitation (2), lesdites tiges s'étendant à partir du sommet du récipient de mélange (1),

dispositif caractérisé par le fait que lesdites tiges sont disposées sur une position radiale l remplissant la condition suivante :

$$d/5 \leq l \leq d/2$$

d étant le diamètre de l'ensemble de déflecteur d'agitation, lesdites tiges s'étendant à une profondeur spécifiée par la condition suivante :

$$d/20 \leq m \leq d/2$$

m étant la distance séparant l'extrémité inférieure desdites tiges (5) et l'ensemble de déflecteur d'agitation (2), et

en ce que lesdites tiges (5) ont une section droite circulaire.

# FIG. 1

# FIG. 2

REGION A

REGION B

$V_t = \omega_c r$

$V_t = \omega_c r_c^2 / r$

CENTER LINE OF THE
AGITATING AND
MIXING DEVICE

# FIG. 3

OPPOSITE FORCE

UNIFORM
PRESSURE
SURFACE

CENTRIFUGAL
FORCE

GRAVITATIONAL
FORCE

## FIG. 4

D = 320 mm
d = 96 mm
H = 320 mm

□ : VERTICAL AXIS
△ : INCLINED AXIS
○ : BAFFLE STICKS

MIXING TIME (sec)

THE NUMBER OF REVOLUTION
OF THE AGITATING DEVICE
(r.p.m)

## FIG. 5

D = 320 mm
d = 96 mm

□ : VERTICAL AXIS
△ : INCLINED AXIS
○ : BAFFLE STICKS

MAXIMUM REVOLUTIONS PER MINUTE
WITHOUT BUBBLES (r.p.m)

QUANTITIES OF LIQUID (Lit.)

# FIG. 6

Scatter plot. Y-axis: TURBIDITY INCREASING RATES (ppm/min), scale 0 to 250. X-axis: THE NUMBER OF REVOLUTION OF THE AGITATING BLADE (rpm), scale 300 to 500.

Legend:
■ TANK BAFFLE 80mm
□ NO BAFFLE
● STICK BAFFLE $\phi$40

## FIG. 7

## FIG. 8